# EUROPÄISCHE PATENTANMELDUNG

(11) **EP 1 936 367 A1**
(43) Veröffentlichungstag der Anmeldung: **25.06.2008**
(21) Anmeldenummer: 06127183.9
(22) Anmeldetag: 22.12.2006
(51) Int. Cl.: G01N 27/416

(54) **Verfahren und Vorrichtung zur Überwachung und/oder zur Bestimmung des Zustandes einer Messsonde**

(71) Anmelder: Mettler-Toledo AG, 8606 Greifensee (CH)
(72) Erfinder: Ammann, Juergen, Zürich 8004 (CH)

(57) **Zusammenfassung**

Das Verfahren dient zur Überwachung und/oder zur Bestimmung des Zustandes einer elektrochemischen Messsonde (1), wie beispielsweise einer pH-Messsonde, einer Sauerstoff-Messsonde oder einer CO₂-Messsonde. Die Messsonde (1) weist mindestens eine Elektrode (EL) auf und ist zur Messung der Ionen-Konzentration eines Prozessguts (6) geeignet.

Erfindungsgemäss während einer Ladungsphase (T_{L}) ein, der Elektrode (EL) zugehöriger Ladungsspeicher (Q2) mittels eines, über eine Steuereinheit (CU) kontrollierbaren Ladungstransfers geladen. In einer, daran anschliessenden, Testphase (T_{T}) wird die resultierende Elektrodenspannung (U_{E}) mindestens einmal gemessen und das Messergebnis weiterverarbeitet.

## Beschreibung

Die vorliegende Erfindung betrifft ein Messverfahren und eine Messvorrichtung zur Überwachung und/oder zur Bestimmung des Zustandes einer elektrochemischen Messsonde wie beispielsweise einer ionen-sensitiven Messsonde, insbesondere einer pH-Messsonde, Sauerstoff-Messsonde oder einer CO₂-Messsonde.

Die Kontrolle und Steuerung industrieller Prozesse, beispielsweise in der chemischen und pharmazeutischen Industrie, in der Textilindustrie, in der Lebensmittel- und Getränkeindustrie, bei der Papier- und Zellstoffverarbeitung oder bei der Wasseraufbereitung und Abwasserbehandlung basiert auf der Messung von Prozessgrössen, die anhand von entsprechenden Messsonden ermittelt werden.

Gemäss [1], "Process Measurement Solutions Catalog 2005/06", Mettler-Toledo GmbH, CH-8902 Urdorf, Seiten 8 und 9 besteht ein komplettes Messsystem aus einem Gehäuse, einer Messsonde, einem Kabel und einem Messumformer (auch Transmitter genannt). Mittels des Gehäuses wird die Messsonde mit dem zu messenden oder zu überwachenden Prozess in Verbindung gebracht; beispielsweise in das Prozessgut eingetaucht und gehalten. Mittels der Messsonde werden entsprechende Prozesseigenschaften gemessen. Messsignale werden über das Kabel zum Transmitter übertragen der mit einem Prozessleitsystem kommuniziert und die Messsignale in lesbare Daten umwandelt. Die Messsonden werden entsprechend den zu messenden Eigenschaften des Prozessguts gewählt.

In [2], Prozessanalytische Systemlösungen für die Brauerei, Firmenschrift der Mettler-Toledo GmbH, CH-8902 Urdorf, Art. Nr. 52 900 309, Druckdatum 09/2003, ist beschrieben, dass beispielsweise in einzelnen Stufen der Prozesskette einer Brauerei (gebildet durch die Wasseraufbereitung; das Sudhaus; den Gär- und Lagerkeller; die Filtration, Karbonisierung und Abfüllung; sowie die Abwasserbehandlung) die Leitfähigkeit, der gelöste Sauerstoff, der pH-Wert und der CO₂-Wert des Prozessguts mittels entsprechenden Messsonden gemessen werden.

Für die einwandfreie Prozessführung ist der Zustand der Messsonden von entscheidender Bedeutung. Fehlerhafte Messungen können zu Fehlproduktionen und Verlusten mit entsprechenden Kostenfolgen führen.

Typischerweise unterliegt eine elektrochemische Messsonde wie zum Beispiel eine pH-Messsonde oder eine Sauerstoff-Messsonde einem prinzipbedingten, belastungsabhängigen Verschleissprozess welcher normalerweise zu einer fortlaufenden Änderungen der Messcharakteristik der Messsonde führt.

Solche Änderungen erfordern entsprechende Reaktionen in Form von Wartungsarbeiten in mehr oder weniger regelmässigen Intervallen. Dies kann beispielsweise eine Reinigung, ein Austauschen, eine erneute Kalibrierung der Messsonde oder eine Fehlerkompensation, eine spezielle Bewertung oder eine Korrektur der Messwerte erfordern.

Insbesondere bei industriellen Anlagen, in denen eine Vielzahl von Messsonden zum Einsatz kommt, erzeugen diese Wartungsarbeiten und insbesondere auch die Planung der Wartungsintervalle einen hohen logistischen Aufwand. Daraus ergibt sich eine wachsende Nachfrage nach Verfahren, die es gestatten, den Zustand einer Messsonde zu bestimmen und/oder zu überwachen, ohne dabei den zu überwachenden Prozess zu unterbrechen. Insbesondere sollte ein Ausbau der Messsonde aus der Prozessanlage wie auch ein Entfernen der Messsonde aus dem Prozessgut vermieden werden.

Aus dem Stand der Technik ist das Verfahren der Widerstandsmessung bekannt, bei dem, ohne Prozessunterbrechung, Schäden und Fehlfunktionen einer Messsonde durch eine kontinuierliche Überwachung festgestellt werden können.

Beispielsweise werden in [3], US 4189367 Glaselektroden zur pH-Messung eingesetzt deren Zustand durch permanente Widerstandsmessung überwacht wird, um eine Beschädigung der Glasmembran zu erkennen. Dabei wird ein erster Teststrom durch die Elektroden geleitet und die Änderung der produzierten Spannung gemessen. Falls die Änderung der Elektrodenspannung einen erwarteten Wert nicht erreicht, wird damit eine defekte Elektrode angezeigt. In Folge wird ein gegengerichteter, zweiter Teststrom von gleicher Grösse und Dauer wie der erste Teststrom durch die Elektrode geleitet um die anfänglich aufgebrachte Ladung zu löschen.

Ferner sind aus dem Stand der Technik verschiedene Verfahren zur Erzeugung der gegengerichteten Testströme bekannt. So können diese wie in [3] mittels gesteuerter Schaltvorrichtungen erzeugt werden. Alternativ können die Testströme aber auch, wie in [4] WO 92/21962 gezeigt, mittels eines Rechteckpulses generiert werden, indem dieser über einen Kondensator geleitet wird. Gemäss [5] U. Tietze, Ch. Schenk, Halbleiterschaltungstechnik, 12. Auflage, Springer Verlag, Berlin 2002, Seite 1538 wirken dabei die Messsonde und der Koppelkondensator als Koppel-RC-Glied und bewirken damit eine Differenzierung des Rechtecksignals in eine positive und eine negative Spannungsspitze. Somit wirkt auf die Elektrode ebenfalls ein bipolares Signal.

Dadurch, dass der Einfluss der Testströme auf die Elektrode stets kompensiert wird, eignet sind das bekannte Verfahren zur kontinuierlichen Messung und damit zur steten Überwachung und zum Erkennung von Schäden und Fehlfunktionen einer Elektrode wie sie durch den Bruch der ionen-sensitiven Membran, eine Verschmutzung des Diaphragmas, einen Leitungsunterbruch oder durch einen Kurzschluss hervorgerufen werden.

Der Nachteil bei den bekannten Verfahren welche auf dem Prinzip der Widerstandsmessung basieren besteht darin, dass nur bedingt befriedigende Aussagen über den generellen Zustand und insbesondere über den aktuellen Verschleisszustand einer Messsonde möglich sind.

In [6] DE10209318 ist dargelegt, dass im Fall einer pH-Messsonde, der Nullpunkt, die Steilheit, die Impedanz oder die Einstellzeit der Elektrode die bevorzugten Parameter sind, mit denen sich der Verschleisszustand der Messsonde zuverlässig bestimmen lässt. Allerdings haben die, diesen Parametern entsprechenden, Messverfahren den Nachteil, dass sie nur bei einem Prozessunterbruch, also typischerweise während einer Kalibrierung der Anlage, ermittelt werden können. Wünschenswert ist jedoch die Bestimmung der für den Zustand relevanten Parameter ohne Prozessunterbruch, insbesondere beim Langzeiteinsatz in heutigen Industrieanlagen.

Der vorliegenden Erfindung liegt daher die Aufgabe zugrunde, ein verbessertes Verfahren und eine verbesserte Vorrichtung zur Überwachung und/oder zur Bestimmung des Zustandes einer elektrochemischen Messsonde, insbesondere einer pH-Messsonde, Sauerstoff-Messsonde oder einer CO₂-Messsonde anzugeben, wobei die Messsonde mindestens eine Elektrode aufweist und während des Betriebs der Messsonde eine, mit der Ionen-Konzentration eines Prozessguts in Zusammenhang stehenden Messgrösse, ermittelt werden kann.

Diese Aufgabe wird mit einem Verfahren sowie einer Vorrichtung gelöst, welche die in den unabhängigen Ansprüchen 1 und 8 angegebenen Merkmal aufweisen. Vorteilhafte Ausgestaltungen der Erfindung sind in weiteren Ansprüchen angegeben.

Beim erfindungsgemässen Verfahren zur Überwachung und/oder zur Bestimmung des Zustandes einer elektrochemischen Messsonde wird während des Betriebs mindestens eine Prüfphase vorgesehen, welche eine Ladungsphase und eine daran anschliessende Testphase aufweist, wobei während der Ladungsphase ein der Elektrode zugehöriger Ladungsspeicher mittels eines, über eine Steuereinheit kontrollierbaren Ladungstransfers geladen wird und während der Testphase die resultierende Elektrodenspannung mindestens einmal gemessen und das Messergebnis weiterverarbeitet wird.

Der Erfindung liegt die Erkenntnis zugrunde, dass sich während des Betriebs einer Messsonde fortlaufend inerte Wasserstoff-Sauerstoff Gruppen in den Randzonen der ionen-senstiven Grenzflächen der Messsonde bilden. Diese Wasserstoff-Sauerstoff Gruppen stehen daher nicht mehr als Ladungsträger für weitere Messungen zur Verfügung. Folglich reduziert sich im Laufe der Betriebsdauer die Zahl der frei verfügbaren Wasserstoff-Sauerstoff Gruppen während gleichzeitig die Beweglichkeit der restlichen freien Wasserstoff-Sauerstoff Gruppen in zunehmendem Mass eingeschränkt wird. Somit ist die Ladungsträgerbeweglichkeit ein zentraler Parameter für die Überwachung und/oder die Bestimmung des Zustandes einer elektrochemischen Messsonde.

Erfindungsgemäss wird die Ladungsträgerbeweglichkeit einer Elektrode durch Messung der Charakteristik der Entladung eines Ladungsspeichers über die Elektrode ermittelt. Wie zuvor beschrieben steht dabei die Entladungsgeschwindigkeit in direktem Zusammenhang mit der Beweglichkeit der freien Ladungsträger.

Mittels Messung der Entladungsgeschwindigkeit einer Elektrode kann somit der Zustand, insbesondere der Verschleisszustand, einer elektrochemischen Messsonde auf zuverlässige Weise bestimmt werden.

Dabei erweist es sich als besonders vorteilhaft, dass mit dem erfindungsgemässen Verfahren und der erfindungsgemässen Vorrichtung der Zustand der Messsonde ohne Prozessunterbrechung bestimmt werden kann, da die Prüfphase während des Betriebs einer Messsonde, also während des normalen Prozessverlaufs durchgeführt werden kann.

Das erfindungsgemässe Verfahren und die erfindungsgemässe Vorrichtung erlauben nicht nur Aussagen über den aktuellen Zustand der Messsonde sondern auch genauere Prognosen über das zukünftige Verhalten der Messsonde was zum Beispiel die Abschätzung der zu erwartenden Lebensdauer verbessert oder die Planung von Wartungszyklen erleichtert.

Als weiterer Vorteil kann durch Bestimmung der Ladungsträgerbeweglichkeit auch das dynamische Verhalten einer Messsonde erfasst werden. So hängt neben der Steilheit und Empfindlichkeit auch die Einstellzeit bzw. die Responsezeit einer Messsonde von der Beweglichkeit der Ladungsträger ab.

Ferner eignet sich das Verfahren besonders gut für den Langzeiteinsatz von Messsonden, da in diesen Fall sehr hohe Anforderungen hinsichtlich eines kontinuierlichen Betriebseinsatzes bestehen. Beim erfindungsgemässen Verfahren ermöglicht die verbesserte Bestimmung des Zustandes einer Messsonde und die Erfassung weiterer charakteristischer Messgrössen das Erkennen und Kontrollieren von Prozessparametern und Parametern der Messsonde, die sich nur langsam und/oder unscheinbar ändern.

Vorzugsweise wird die Elektrodenspannung über einen Signaldraht an eine Signalverarbeitungseinheit weitergeleitet und während der Testphase mindestens einmal gemessen. Dabei kann der Begriff Signaldraht alle möglichen Formen von elektrischen leitenden Verbindungen wie Kupferdrähte, Leitungen, Verbindungen auf Leiterplatten oder integrierte Schaltungen bedeuten.

Die Messergebnisse werden weiterverarbeitet indem sie beispielsweise an eine Signalauswerteeinheit weitergeleitet, direkt ausgewertet oder zwischengespeichert werden. Sie können aber auch zu einem späteren Zeitpunkt, also während des normalen Betriebs der Messsonde oder in einer später folgenden Messphase weiterverarbeitet werden. Möglich ist auch eine spätere Weiterverarbeitung und/oder Aufbereitung beispielsweise in der Signalauswerteeinheit, in einem Transmitter oder in einem Leitrechner. Schliesslich kann mittels statistischer Analysen in der Signalauswerteeinheit oder in einem Leitrechner das Langzeitverhalten einer Baureihe mehrerer Messsonden ermittelt werden.

In einer möglichen Ausgestaltung des erfindungsgemässen Verfahrens und der erfindungsgemässen Vorrichtung wird während des Betriebs der Messsonde mindestens eine Messphase zur Messung der Ionen-Konzentration eines Prozessguts vorgesehen. Diese Messphase wird dann während der Prüfphase unterbrochen. Dadurch werden Messphase und Prüfphase getrennt und somit die gegenseitige Beeinflussung der Messungen vermieden.

In einer weiteren Ausgestaltung der Erfindung wird während der Testphase der Ladungsspeicher, vorzugsweise mittels einer ersten Schaltvorrichtung, von einer Ladungsquelle getrennt, und damit verhindert das die Ladungsquelle das Testen der Entladung beeinflussen kann.

Vorteilhafterweise wird während der Testphase die Elektrodenspannung genügend oft gemessen um die charakteristischen Parameter des Verlaufs der Elektrodenspannung während der Testphase zu bestimmen. So können durch mehrmaliges Wiederholen sowohl komplexere Parameter berechnet als auch eine Genauigkeit der Ergebnisse der Auswertung verbessert werden.

In einer weiteren Ausgestaltung des Verfahrens wird, anschliessend an die Testphase die Ladung des Ladungsspeichers mittels einer zweiten Schaltvorrichtung vorzugsweise durch einen Erdschluss gelöscht. Dadurch wird sichergestellt, dass für den weiteren Betrieb der Messsonde eine eventuell vorhandene Restladung des Ladungsspeichers die weiteren Messungen der Ionen-Konzentration nicht beeinflussen kann. Vorzugsweise wird diese Phase vor dem Ende der Prüfphase abgeschlossen. In dem Fall, dass die Ladung während der Testphase in genügendem Mass abgebaut wurde, kann ein aktives Löschen der Restladung entfallen.

In einer bevorzugten Ausgestaltung des Verfahrens werden weitere Messsignale, wie bipolare Pulse, mittels einer dritten Schaltvorrichtung, vorzugsweise ausserhalb der Prüfungsphase, also typischerweise während der Messphase, an den Ladungsspeicher zugeschaltet. So kann die erfindungsgemässe Methode auf mit der bekannten Methode der Fehlererkennung mittels Widerstandsmessung kombiniert werden. Als Koppelelement kann der erfindungsgemässe Ladungsspeicher, aber auch ein weiterer, speziell vorgesehener Koppelkondensator verwendet werden.

Beim erfindungsgemässen Verfahren können die Prüfphasen in veränderbar vordefinierten Zeitabständen, insbesondere in Zeitabständen von Minuten, Stunden oder Tagen wiederholt werden. Dadurch wird die Messphase nur selten durch die Prüfungsphase beeinflusst und die Belastung der Elektrode durch die zusätzlich aufgebrachte Ladung relativ gering gehalten.

In einer Ausgestaltung der Erfindung kann der Ladungsspeicher in der Messsonde integriert oder als externer Ladungsspeicher angeordnet sein. Dazu ist dieser Ladungsspeicher in Parallelschaltung zur Signalquelle und dem inneren Widerstand der Elektrode angeordnet.

In einer weiteren Ausgestaltung der Erfindung kann der Ladungsspeicher auch nur während der Prüfphase mittels eines Schaltelements zugeschaltet werden. Dabei wird der Ladungsstrom, vorzugsweise durch einen Widerstand, begrenzt. Auf diese Weise kann eine völlige Trennung des Ladungsspeichers während des Betriebs der Messsonde oder während der Messphase erreicht werden.

In dieser Ausgestaltung kann auch die Ladungsquelle die Funktion des Ladungsspeichers übernehmen, was eine besonders kostengünstige Realisierung ermöglicht. Ferner können die verschiedenen Schaltelemente, wie das erste und das dritte Schaltelement, in Form eines geeigneten Umschalters zusammengelegt werden.

Vorzugsweise kann die gemessene Spannung über einen Signaldraht einer Signalverarbeitungseinheit der Verarbeitung zugeführt werden. Diese Verarbeitung kann aus einer Weiterleitung des Signals oder einer Vielzahl von Verarbeitungsschritten, wie der Impedanzwandlung, der Verstärkung und/oder der Speicherung bestehen. Zudem können in der Signalverarbeitungseinheit weitere signalverarbeitende Elemente wie ein Komparatorelement, eine Multiplexeinheit, eine Prozessoreinheit oder eine Recheneinheit integriert sein.

In vorteilhafter Weise kann die Verarbeitung der Messsignale mittels eines Elements zur Analog-Digital-Wandlung durchgeführt werden. Dabei kann dieses Element auch in der Signalverarbeitungseinheit der Messsonde oder in einer Auswertevorrichtung integriert sein. Durch die Digitalisierung der Messwerte können diese einer digitalen Verarbeitung zugeführt werden, was relative komplexe Operationen und einfache Speicherung der Daten in der Signalverarbeitungseinheit der Messsonde, der Auswertevorrichtung oder einem externen Speicher ermöglicht.

In einer weiteren Ausgestaltung des Verfahrens können die Messergebnisse mit erwarteten Werten der Elektrodenspannung beispielsweisse in der Signalverarbeitungseinheit der Messsonde oder in einer Auswertevorrichtung verglichen werden.

Die erwarteten Werte der Elektrodenspannung können durch experimentelle und/oder rechnerische Methoden bestimmt werden. Dabei können auch Vergleichsmessungen zu intakten Messsonden also auch zu weiteren Elektroden oder Hilfselektroden herangezogen werden. Ferner können die erwarteten Werte der Elektrodenspannung aber auch aus Maximalwerten, Schwellwerten und Grenzwerten aus Regelwerken wie nationalen oder internationalen Normen stammen. Ausserdem können die Erfahrungswerte auch vom Hersteller der Messsonde oder der Elektrode festgelegt werden.

Der Vergleich der gemessenen und der erwarteten Werte der Elektrodenspannung kann mittels einer Vergleichsvorrichtung wie einer Komparatorschaltung oder einer Recheneinheit verglichen werden. Dabei sind unter dem Begriff Recheneinheit alle Arten von signal-verarbeitenden Elementen, wie analoge Schaltkreise, digitale Schaltkreise, integrierte Schaltkreise, Prozessoren, Computer und dergleichen, zu verstehen. Vorzugsweise kann diese Vergleichsvorrichtung mittels der Signalverarbeitungseinheit oder in einer Signalauswerteeinheit in der Auswerteeinheit realisiert werden.

Die Auswerteeinheit oder der Transmitter kann verschiedene Komponenten wie eine Kommunikationseinheit, eine Signalauswerteeinheit und/oder eine Speichereinheit aufweisen. Vorzugsweise können diese Einheiten durch direkte Verbindungen in beide Richtungen kommunizieren und sowohl Instruktionen und Programme als auch Messwerte und Ergebnisse austauschen.

In einer bevorzugten Ausprägung der Erfindung werden sämtliche Aktivitäten der Messsonde und der Auswertevorrichtung durch die Kommunikationseinheit koordiniert. Zudem kann die Kommunikationseinheit mit einem Leitrechner bidirektional kommunizieren und sowohl Instruktionen, Programme, Betriebsdaten, Messwerte und/oder ausgewertete Ergebnisse übertragen.

Ferner können in einer bevorzugten Ausführungsform Betriebsdaten wie erwarteten Werte der Elektrodenspannung, Schwellwerte, Kontrollparameter, Kennzahlen und Programme in einer Speichereinheit auf dem Transmitter TR nichtflüchtig abgelegt werden. Beispielsweise könnten diese Daten von einem Leitrechner an eine Kommunikationseinheit übermittelt und in die Speichereinheit geschrieben werden. Bei Bedarf können die Daten dann von der Signalauswerteeinheit gelesen werden.

Schliesslich kann die Messsonde auch so ausgebildet sein, dass in jeder Messsonde Einheiten, wie Signalauswerteeinheit, Speichereinheit und/oder Kommunikationseinheit aber auch eine Auswertevorrichtung oder ein Transmitter mit den zuvor genannten Funktionalitäten integriert sind.

Die erfindungsgemässe Vorrichtung zur Überwachung und/oder zur Bestimmung des Zustandes einer elektro-chemischen Messsonde, insbesondere einer pH-Messsonde, Sauerstoff-Messsonde oder einer CO₂-Messsonde, mit mindestens einer Elektrode und einer Signalverarbeitungseinheit, wobei während des Betriebs der Messsonde eine mit der Ionen-Konzentration eines Prozessguts in Zusammenhang stehenden Messgrösse ermittelt werden kann, zeichnet sich dadurch aus, dass die Messsonde einen der Elektrode zugeordneten durch einen kontrollierbaren Ladungstransfer ladbaren Ladungsspeicher, eine der Erzeugung einer Prüfphase, welche eine Ladungsphase und eine daran anschliessende Testphase aufweist, dienende Steuereinheit und einen der Weiterleitung eines während der Testphase mindestens einmal gemessenen Elektrodenspannungswerts zu der Signalverarbeitungseinheit dienenden Signaldraht umfasst.

Das erfindungsgemässe Verfahren eignet sich auch für die Bestimmung des Zustands der in einer Anlage integrierten Messsonden, die, ohne diese auszubauen, von Zeit zu Zeit, insbesondere unter Anwendung bekannter CIP- oder SIP-Prozesse, gereinigt wird. In vorteilhafter Weise können die Messwerte, die während solcher Reinigungsprozesse ermittelt werden in die Gesamtbeurteilung des Zustandes der Messsonde miteinbezogen werden.

Einzelheiten des erfindungsgemässen Verfahrens und der erfindungsgemässen Vorrichtung ergeben sich anhand der Beschreibung der in den stark schematisierten Zeichnungen dargestellten Ausführungsbeispiele. Es zeigen:
- Figur 1: eine Prinzipzeichnung eines Systems zum Messen der Ionen-Konzentration in einer Lösung 6 mittels elektrochemischer Messsonden 1a, 1 b, 1c;
- Figur 2: in schematischer Darstellung eine elektrochemische Messsonde 1 welche in ein Prozessgut 6 eingetaucht und mit einer Auswertevorrichtung 3 verbundenen ist;
- Figur 3: ein Blockschaltbild einer Messsonde 1 mit Elektrode EL, Ladungsquelle Q1, Ladungsspeicher Q2 und Steuerungseinheit CU, Schaltelementen S1, S2 und S3;
- Figur 4: ein Blockschaltbild einer weiteren möglichen Ausgestaltungsform der Erfindung mit einem, in der Messsonde 1 integriertem, Ladungsspeicher Q2;
- Figur 5: ein Blockschaltbild einer weiteren möglichen Ausgestaltungsform der Erfindung mit einem, über einen Umschalter S4, der Messsonde zuschaltbaren Ladungsspeicher Q2;
- Figur 6: in schematischer Darstellung einen zeitlichen Verlauf des Ladungsstroms des Ladungsspeichers und dementsprechend zwei mögliche Verläufe der resultierenden Elektrodenspannung und eine mögliche Wahl der Messpunkte.

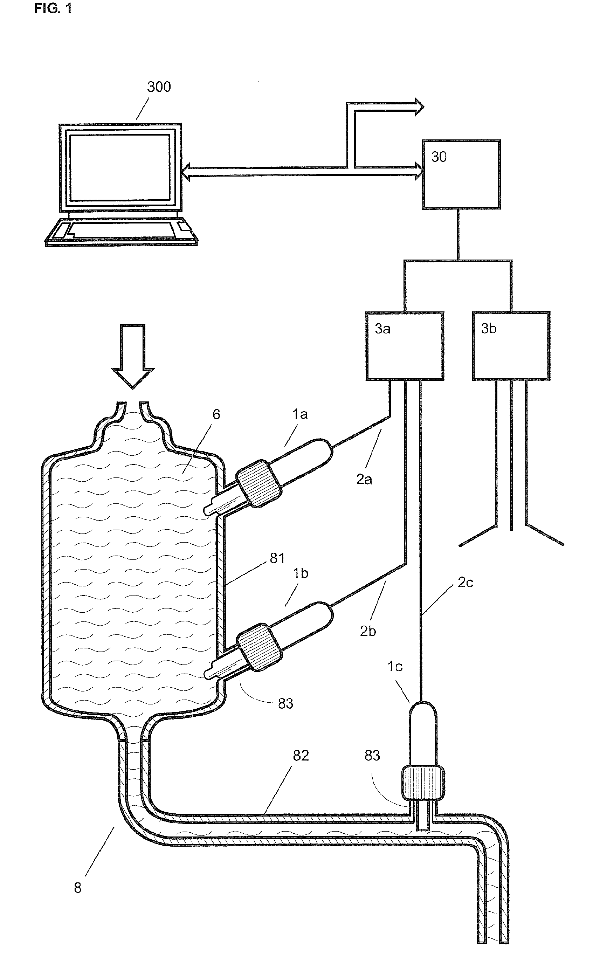

Figur 1 zeigt eine Anlage mit einem Behältnis 8 bestehend aus einem mit einem Prozessgut 6 gefüllten Behälter 81, der mittels eines Verbindungsrohrs 82 gegebenenfalls mit einer Anlageneinheit einer nächsten Prozessstufe verbunden ist. Die Eigenschaften des Prozessguts 6 werden mittels Messsonden 1a, 1 b, 1 c, gemessen, die über Signalübertragungsvorrichtungen 2 mit einer Auswertevorrichtung 3a bzw. 3b verbunden sind. Die u.a. als Messumformer dienenden Auswertevorrichtungen 3a, 3b sind über einen Segmentkoppler 30 mit einem Leitrechner 300 verbunden.

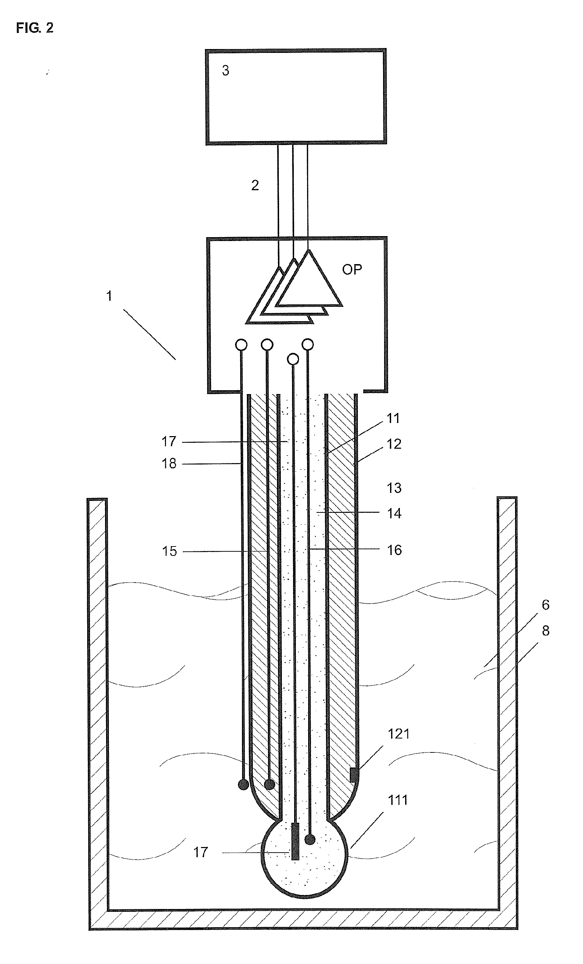

Der prinzipielle Aufbau einer elektrochemischer Messsonde wie beispielsweise einer pH-Messsonde, die als Einstabmesskette eine Glaselektrode 16, eine Referenzelektrode 15 und eine Hilfselektrode 18 umfasst, ist in Figur 2 schematisch gezeigt. In der Messsonde 1 sind die mit einem Ableitelement 16 versehene Glaselektrode und die mit einem Bezugselement 15 versehene Referenzelektrode konstruktiv zusammengebaut. Das Ableitelement 16 ist in einer ersten Kammer innerhalb eines Innenrohrs 11 und einer daran anschliessenden dünnwandigen Glashalbkugel bzw. Glasmembran 111 in eine Lösung mit definiertem pH-Wert bzw. einen Innenpuffer 14 getaucht, der die leitfähige Verbindung zwischen der Innenseite der Glasmembran 111 und dem Ableitelement 16 erstellt. Das Bezugselement 15 ist innerhalb eines Aussenrohrs 12 in einen Elektrolyten bzw. einen Aussenpuffer 13 eingetaucht ist, der durch eine poröse Trennwand beziehungsweise ein Diaphragma 121 einen Ladungsaustausch mit dem Messgut 6 ermöglicht.

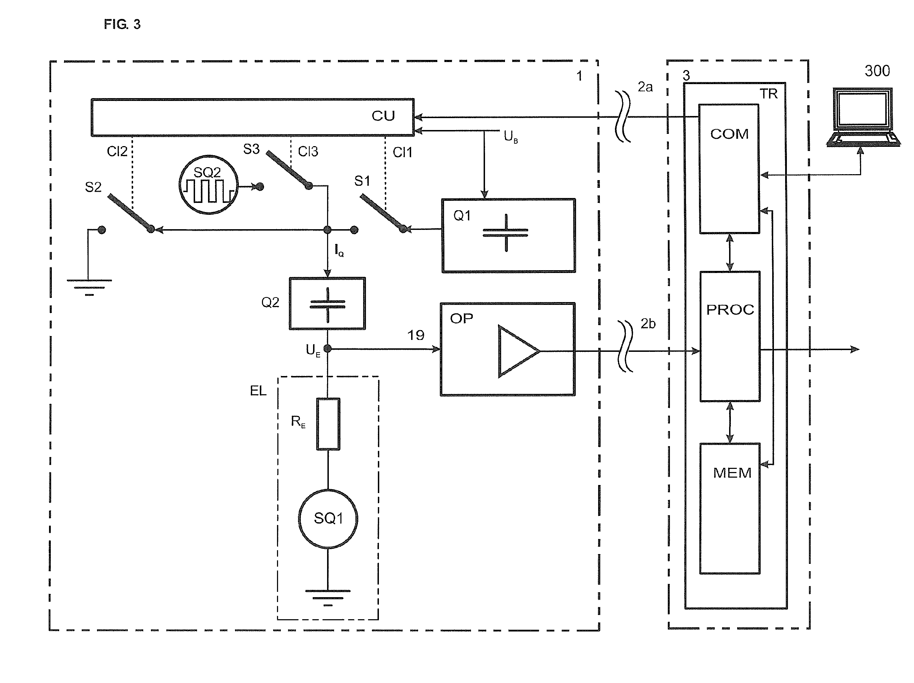

Die elektrischen Potentiale der Signalquellen (siehe Figur 3, Signalquelle SQ1) die während der Messung am Ableitelement 16, am Bezugselement 15 und/oder an der Hilfselektrode 18 entstehen, werden gemessen und mit der Signalverarbeitungseinheit OP, vorzugsweise einem Operationsverstärker, weiter verarbeitet. Im Innenpufferraum ist ein Temperaturmessfühler 17 angeordnet, mittels dessen die Durchführung einer automatischen Kompensation von Temperatureinflüssen und die Erfassung von Temperaturzyklen realisierbar sind. Die Signalverarbeitungseinheit OP, die nachstehend näher beschrieben wird, ist in den Kopf der Messsonde 1 integriert und über Signalleitungen 2 mit der Auswertevorrichtung 3 verbunden.

Figur 3 zeigt die Messvorrichtung von Figur 2 in einer vorteilhaften Ausgestaltung mit einer Messsonde 1, die mindestens eine Elektrode EL, beispielsweise eine Glaselektrode und eine Referenzelektrode aufweist. An der Elektrode EL tritt die Spannung U_{E} auf, sobald die Messsonde 1 in das Prozessgut 6 eingetaucht wird. Das Prozessgut 6 und die Elektrode EL bilden dabei die Spannungsquelle SQ1, deren Innenwiderstand als Widerstand der Elektrode R_{E} dargestellt wird. So bildet beispielsweise die Glasmembran einer Glaselektrode einen sehr hohen Widerstand, während der Übergangswiderstand der Referenzelektrode einen relativ niedrigen Wert ergibt.

Die Spannung U_{E} wird über einen Signaldraht 19 einer Signalverarbeitungseinheit OP der Verarbeitung zugeführt. Anschliessend werden die unverarbeiteten, teilweise oder voll verarbeiteten Signale über eine Leitung 2b einer Signalauswerteeinheit PROC zugeleitet. Die Signalauswerteeinheit PROC ist in einer Auswertevorrichtung 3 beziehungsweise einem Transmitter 3 integriert und kann über interne Verbindungen mit einer Speichereinheit MEM und einer Kommunikationseinheit COM kommunizieren. Die verarbeiteten und/oder ausgewerteten Messungen können dann beispielsweise zur Steuerung und zur Überwachung der Anlage weitergeleitet werden.

Die Auswerteeinheit 3 oder der Transmitter TR weist verschiedene Komponenten, wie eine Kommunikationseinheit COM, eine Signalauswerteeinheit PROC und/oder eine Speichereinheit MEM auf, welche jeweils bidirektional untereinander verbunden sind und somit entsprechende Daten, Instruktionen oder Programme austauschen können.

Die Kommunikationseinheit COM koordiniert sämtliche Aktivitäten der Messsonde 1 und der Auswertevorrichtung 3 und stellt die Kommunikation mit dem Leitrechner 300 her. Über die Leitung 2a werden Instruktionen von der Kommunikationseinheit COM an eine Steuereinheit CU in der Messsonde 1 übertragen. Die Kommunikationseinheit COM kann auch Instruktionen an die Signalauswerteeinheit PROC abgeben, von der Signalauswerteeinheit PROC Daten entgegennehmen oder auch Daten und Programme in der Speichereinheit MEM ablegen.

Die Steuereinheit CU, die auch in der Signalverarbeitungseinheit OP integriert sein kann, operiert als Steuerungselement für die Schaltelemente S1, S2 und S3. Dabei werden über die Steuerausgänge CL1, CL2 und CL3 Steuersignale abgegeben, die entsprechende Aktionen der Schaltelemente auslösen. Die Schaltelemente können als mechanische, als elektronische oder als Halbleiter Elemente wie Transistoren ausgebildet sein. Vorzugsweise können die Schaltvorgänge aber auch direkt mit der Steuereinheit CU ausgeführt werden.

Während der Messphase, während der die Prozessgrössen gemessen werden, sind beide Schaltelemente S1 und S2 geöffnet. Diese Schaltelemente und der Ladungsspeicher haben somit während dieser Messphase keinen Einfluss auf den Betriebszustand und die Messungen der Elektroden.

Mittels des Schaltelement S3 können sowohl während der Messphase als auch während der Prüfphase weitere Messsignale, wie bipolare Pulse, aufgebracht werden. Diese Signale können über eine Signalquelle SQ2 erzeugt und über den Ladungsspeicher Q2 oder auch über einen separaten Kondensator eingekoppelt werden. Somit steht nach dem Schliessen des Schaltelements S3 das bekannte Verfahren der Widerstandsmessung zur Erkennung von Fehlfunktionen zur Verfügung.

Zu Beginn der Prüfphase wird das Schaltelement S1 geschlossen und das Schaltelement S2 in geöffneter Position gehalten und somit die Ladungsquelle Q1 mit derm Ladungsspeicher Q2 verbunden. In der Folge wird der Ladungsspeicher Q2 mittels eines Ladungstransfers durch den Ladungsstrom I_{Q} geladen.

Der Ladungstransfer kann am Ende der Ladungsphase, durch das Öffnen des Schaltelements S1 unterbrochen werden. In der Folge ist der Ladungsspeicher Q2 dann direkt mit der Elektrode EL verbunden und vom Einfluss der Ladungsquelle Q1 getrennt.

Die restliche Ladung des Ladungsspeichers Q2 kann im Anschluss an die Testphase durch Schliessen des Schalters S2 während einer geeigneten Zeitspanne gelöscht werden. Vorzugsweise wird dabei die Ladung des Ladungsspeichers Q2 auf Erdpotential abgeleitet.

Der Einfluss der aufgebrachten Ladung auf die Elektrode EL und der daraus resultierenden Elektrodenspannung U_{E} kann vorzugsweise mit der oben genannten Signalverarbeitungseinheit OP gemessen, verarbeitet und weitergeleitet werden. Es kann aber auch auf eine weitere, nicht eingezeichnete, für das erfindungsgemässe Verfahren speziell vorgesehene Signalverarbeitungseinheit umgeschaltet werden.

Die Versorgungsspannung für die Ladungsquelle Q1 und gegebenenfalls weiterer Bauelemente kann der Betriebsspannung U_{B} oder parasitär der Leitung 2 entnommen und geeignet eingestellt werden.

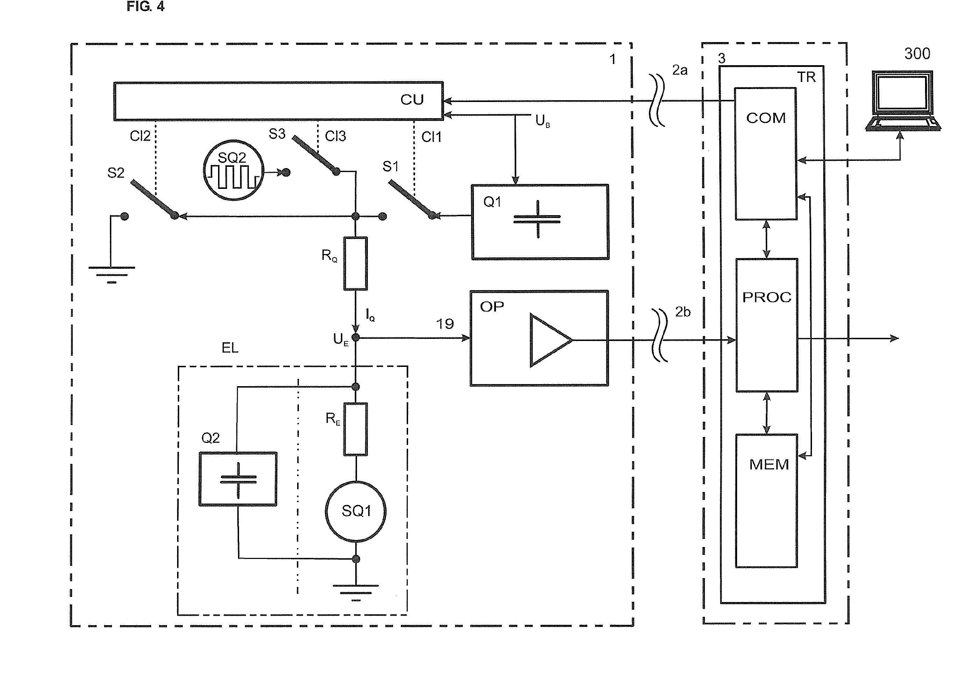

Figur 4 stellt eine weitere Ausgestaltung der erfindungsgemässen Vorrichtung dar. Diese entspricht der, zuvor in Figur 3 beschriebenen, Ausgestaltung ausser, dass in diesem Fall der Ladungsspeicher Q2 als internes Element in der Elektrode EL oder als externes Element ausserhalb der Elektrode angeordnet und parallel zu der Signalquelle SQ1 und dem Innenwiderstand der Elektrode R_{E} geschaltet ist. Zusätzlich ist ein Widerstand R_{Q} in der Verbindung zwischen Ladungsspeicher Q2 und der Elektrode EL vorgesehen, um den Ladungsstrom I_{Q} zu begrenzen. Der Widerstand kann aber auch den Wert null aufweisen.

Der Ladungsstrom I_{Q} fliesst dann während der Ladungsphase über den Widerstand R_{Q} zur Elektrode EL und zum Ladungsspeicher Q2 während die Elektrodenspannung U_{E} unverändert am Signaldraht 19 gemessen werden kann. Der Ladungsspeicher Q2 kann in Form einer physisch getrennten Einheit, aber auch als innere Kapazität der Elektrode EL, beispielsweise als Kapazität der Ableitelemente 16 oder der Bezugselemente 15 gebildet werden.

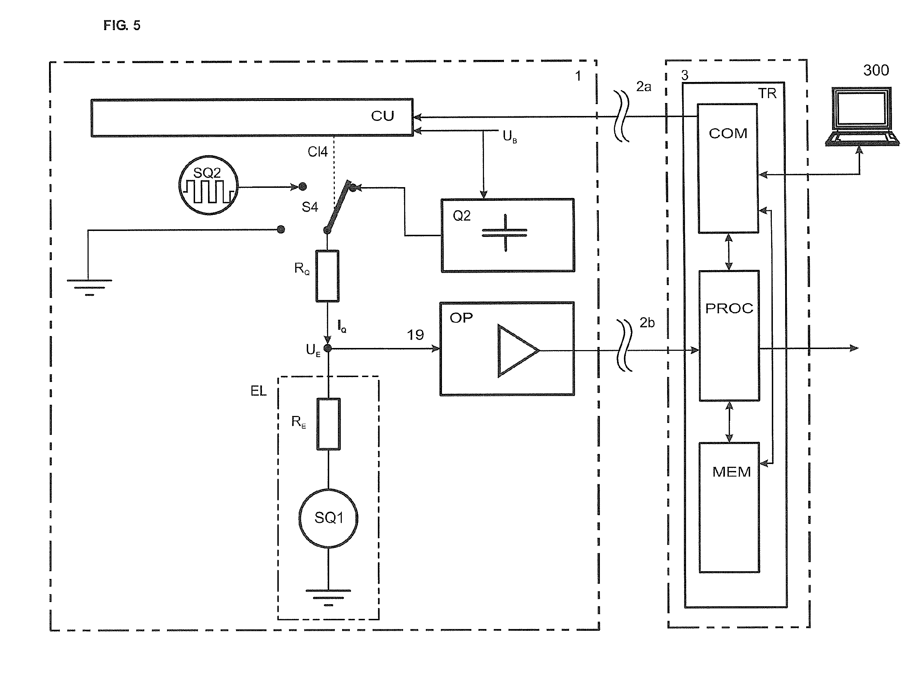

Figur 5 stellt eine weitere Ausgestaltung der erfindungsgemässen Vorrichtung dar. Diese entspricht der in Figur 3 beschriebenen Ausgestaltung ausser, dass in diesem Fall der Ladungsspeicher Q2 an die Elektrode zuschaltbar ist. Ausserdem ist wie in Figur 4 ein Widerstand R_{Q}, der auch null sein kann, in der Verbindung zwischen Ladungsspeicher Q2 und der Elektrode EL vorgesehen, um den Ladungsstrom I_{Q} zu begrenzen.

In dieser Ausgestaltung wird die Zuschaltung mit einem Umschalter S4 realisiert, der über den Steuerausgang C14 der Steuereinheit CU gesteuert wird. Somit kann zwischen der Zuschaltung der Ladungsspannung, der Messsignale der Signalquelle SQ2 und einem Erdschluss umgeschaltet werden. Diese Funktionalität könnte aber auch mittels einzelner Schaltelemente erreicht werden was beispielsweise die Zuschaltung der Messsignale der Signalquelle SQ2 während der Prüfphase gestatten würde. Der Ladungsspeicher Q2 wird in diesem Beispiel direkt über die Betriebsspannung U_{B} geladen.

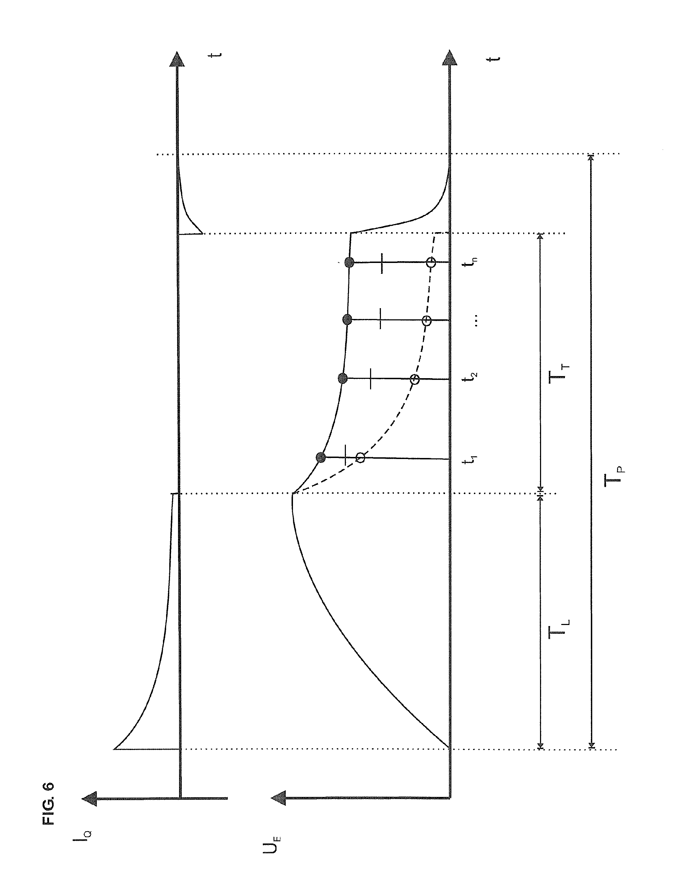

Figur 6 zeigt die Signalverläufe während einer typischen Prüfphase T_{P}. Das obere Diagramm I_{Q}(t) zeigt den zeitlichen Verlauf des Ladungsstroms I_{Q} während der Ladungsphase T_{L}, der Testphase T_{T} und der Entladung. Das untere Diagramm U_{E}(t) stellt den zeitlichen Verlauf der resultierenden Elektrodenspannung U_{E} dar.

Das Elektrodenpotential, das während des Betriebs oder während der Messphase der Messsonde 1 und damit das Potential der Signalquelle SQ1 über dem Widerstand R_{E} kann je nach Anwendung negative Werte, positive Werte oder den Wert null annehmen. Zur Vereinfachung wird in der Figur die Elektrodenspannung U_{E} für eine Elektrode EL mit einem Nullpotential dargestellt.

Vor der Prüfphase T_{P}, also typischerweise während des Betriebs der Messsonde 1, wird normalerweise die aktuelle Elektrodenspannung U_{E} gemessen.

Durch Schliessen des Schaltelements S1 wird die Ladungsquelle Q1 mit dem Ladungsspeicher Q2 verbunden und damit der Beginn einer Prüfphase T_{P} und einer Ladungsphase T_{L} definiert. Durch diese Verbindung werden Ladungen transferiert was zu einem Anstieg der Ladung im Ladungsspeicher Q2, einem Abfall des Ladungsstroms I_{Q} und zu einem entsprechenden Anstieg der Elektrodenspannung U_{E} führt. Der Verlauf der Signale folgt im Wesentlichen der bekannten exponentiellen Form.

Am Ende der Ladungsphase T_{L} wird mit Öffnen des Schaltelements S1 der Ladungstransfer unterbrochen.

Im Anschluss an die Ladungsphase kann in der Testphase T_{T} die Elektrodenspannung U_{E} einmalig oder mehrmalig zu den Zeitpunkten t₁, t₂ bis und mit tₙ gemessen werden.

Dargestellt sind die Verläufe der Elektrodenspannung U_{E} von zwei möglichen Zuständen einer Messsonde 1. So kann beispielsweise der langsam abfallende Verlauf (durchgezogene Linie) von einer verbrauchten Messsonde 1 und der schnell abfallende Verlauf (gestrichelte Linie) von einer unverbrauchten Messsonde 1 resultieren.

Ferner sind zu den einzelnen Messwerten entsprechende, mögliche Schwellwerte in Form von Querbalken dargestellt. Anhand dieser Werte kann in diesem Beispiel der Verschleisszustand der Messsonde 1 auf einfache Weise beurteilt werden.

In einer möglichen Ausgestaltung der Erfindung kann die Testphase T_{T} durch das Schliessen des zweiten Schaltelements S2 beendet werden. Vorzugsweise wird diese Löschung vor dem Ende der Prüfphase T_{P} abgeschlossen. Der Verlauf des entsprechenden Entladungsstroms I_{Q} und der Elektrodenspannung U_{E} sind am Ende der Prüfungsphase Tₚ dargestellt.

Nach Abschluss der Prüfphase T_{P} kann der normale Betrieb der Messsonde 1 oder die Messphase der Messsonde fortgesetzt werden, vorzugsweise unter Zuschaltung weiterer Messsignale wie bipolarer Pulse zur Überwachung der Funktion der Messsonde 1.

Das erfindungsgemässe Verfahren bietet nun verschiedene Möglichkeiten, den Zustand der Messsonde präzise zu ermitteln. Die während der Prüfphase ermittelten Messwerte, gegebenenfalls der teilweise oder vollständige Verlauf der Entladung des Ladungsspeichers wird in der Auswerteeinheit mit wenigstens einem Schwellwert oder mit charakteristischen Kurvenverläufen verglichen. Die Auswerteeinheit, wie in den Zeichnungen dargestellt, die im Transmitter 3 vorgesehene Signalauswerteeinheit PROC oder ein in der Messsonde vorgesehener Signalprozessor.

Den Schwellwerten oder den Entladekurven, die als Referenzen in der Auswerteeinheit gespeichert sind, können dabei mögliche Zustände der Messsonde, wie eine Mass der reduzierten Ladungsträgerbeweglichkeit, ein Wert der Ansprechzeit, ein Wert der Steilheit, ein Defekt der Glasmembran, beispielsweise ein Glasbruch, oder eine Verschmutzung der Messsonde 1 zugeordnet sein.

Durch den Vergleich der gemessenen Entladekurve oder eines oder mehrer Punkte derselben, kann daher eine von mehreren Zustandseigenschaften oder Kombinationen davon gestellt werden.

Daraus kann beispielsweise auch eine korrespondierende Restlebenszeit oder ein Wartungsbedarf ermittelt und signalisiert werden.

In vorzugsweisen Ausgestaltungen werden wenigstens in einer ersten und einer zweiten Prüfphase ermittelte Zustände erfasst und ausgewertet. Beispielsweise können die typischen Kalibrierparameter, wie die Responsezeit, der Nullpunkt und die Steilheit ermittelt und über zwei und mehrere Prüfphasen aufgezeichnet werden. Möglich ist die Aufzeichnung weiterer Eigenschaften der Messsonde, wie der Widerstand der Elektrode. Dadurch resultieren registrierte Verläufe der Eigenschaften der Messsonde, die wiederum einen hohen Informationsgehalt aufweisen. Beispielsweise werden die Steilheiten dieser Verläufe erfasst und ausgewertet. Möglich ist beispielsweise, dass die Eigenschaften der Messsonde für jede Prüfphase noch in einem guten Bereich liegen. Aufgrund einer rapiden Veränderung des Verhaltens, das vorzugsweise extrapoliert wird, lässt sich daher feststellen, wann mit einer Fehlfunktion oder einem nicht mehr tolerierbaren Messverhalten gerechnet werden muss.

Vorzugsweise werden die registrierten Verläufe der Eigenschaften der Messsonde unter Berücksichtung der Einflüsse, wie Temperatur, pH-Wert, der Messsonde ausgewertet, so dass feststellbar ist, ob die Veränderungen auf Prozesseinwirkungen oder unerwartete Änderungen bzw. Störungen innerhalb der Messsonde 1 zurückzuführen sind.

Ganz besonders vorteilhaft, können die ermittelten Testergebnisse verwendet werden, um Korrekturfaktoren oder Verzögerungsfaktoren anzupassen, die während der Messphase zur Verarbeitung des Messsignals verwendet werden. Sofern eine geringere Steilheit registriert wird, kann das Messsignal, das beispielsweise den pH-Wert des Prozessguts repräsentiert, mit einem Gewichtungsfaktor > 1 multipliziert werden, um die Veränderung zu kompensieren.

Das erfindungsgemässe Verfahren erlaubt daher nicht nur, den Zustand der Messsonde zu testen, sondern die gesamte Anlage automatisch zu kalibrieren, ohne dass die Messsonden 1 ausgebaut werden müssen.

Dadurch resultieren einerseits weniger Prozessunterbrüche und andererseits ein optimiertes Verhalten der Anlage mit einer präziseren Führung der Prozesse.

Die Erfindung kann zudem mit minimalem Aufwand realisiert werden. Der Signalpfad für die Messsignale, bzw. ein von der Messsonde 1 gemessener pH-Wert, und der Signalpfad für die Testsignale sind vorzugsweise identisch.

Der Ladungsspeicher kann beispielsweise mittels der Eigenkapazitäten der Messsonde oder mit wenigstens einem zusätzlichen Kondensator realisiert werden, der mit der Elektrode EL fest verbunden oder zum Zweck der Prüfung jeweils zugeschaltet wird.

In einer vorteilhaften Ausgestaltung der Erfindung kann ein Ladungsspeicher geladen und für die Prüfphase der Messsonde 1 zugeschaltet werden. Beispielsweise kann der Ladungsspeicher Q2 von Figur 4 während der Messphase geladen und bereits zu Beginn der Prüfphase in geladenem Zustand auf die Elektrode umgeschaltet werden. Die Ladungsphase innerhalb der Prüfphase wird in diesem Fall gleich Null. D.h. mit Beginn der Prüfphase beginnt in diesem Fall die Entladung des Ladungsspeichers Q2, der für diese Zeit von der Versorgungsspannung Ub getrennt ist. D.h., es wird eine Umschaltung zwischen der Versorgungsspannung Ub und der Elektrode vorgenommen.

### Bezugszeichenliste

- 1, 1a, 1b, 1c: Messsonde
- 2, 2a, 2b, 2c: Signalleitung
- 3, 3a, 3b: Auswertevorrichtung (Transmitter)
- 30: Segmentkoppler
- 300: Leitrechner
- 6: Prozessgut
- 8: Behältnis
- 11: Innenrohr
- 111: Glasmembran
- 12: Aussenrohr
- 13: Aussenpuffer
- 14: Innenpuffer
- 15: Bezugselement
- 16: Ableitelement
- 17: Temperaturmessfühler
- 18: Hilfselektrode
- 19: Signaldraht

- COM: Kommunikationseinheit
- C11,C12,C13: Steuerausgang
- CU: Steuereinheit
- EL: Elektrode
- I_{Q}: Ladungsstrom
- MEM: Speichereinheit
- OP: Signalverarbeitungseinheit
- PROC: Signalauswerteeinheit
- Q1: Ladungsquelle
- Q2: Ladungsspeicher
- R_{E}: Elektrodenwiderstand
- S1,S2,S3: Schaltelement
- SQ1, SQ2: Signalquelle
- T_{P}: Prüfphase
- T_{L}: Ladungsphase
- T_{T}: Testphase
- TR: Transmitter
- U_{B}: Betriebsspannung
- U_{E}: Elektrodenspannung

### Literaturverzeichnis

[1] Process Measurement Solutions Catalog 2005/06,Mettler-Toledo GmbH, CH-8902 Urdorf (siehe http://www.mtpro.com)
[2] Prozessanalytische Systemlösungen für die Brauerei, Firmenschrift der Mettler-Toledo GmbH, CH-8902 Urdorf, Art. Nr. 52 900 309, Druckdatum 09/2003
[3] US 4189367
[4] WO 92/21962
[5] U. Tietze, Ch. Schenk, Halbleiterschaltungstechnik, 12. Auflage, Springer Verlag, Berlin 2002, Seite 1538
[6] DE 10209318

## Patentansprüche

1. Verfahren zur Überwachung und/oder zur Bestimmung des Zustandes einer mit mindestens einer Elektrode (EL) versehenen elektrochemischen Messsonde (1), insbesondere einer pH-Messsonde, einer Sauerstoff-Messsonde oder einer CO₂-Messsonde (1), mittels der die die Ionen-Konzentration eines Prozessguts (6) ermittelt werden kann, **dadurch gekennzeichnet, dass** während des Betriebs der Messsonde (1) mindestens eine Prüfphase (Tp) vorgesehen wird, welche gegebenenfalls eine Ladungsphase (T_{L}) und eine daran anschliessende Testphase (T_{T}) aufweist, wobei während der Ladungsphase (T_{L}) ein der Elektrode (EL) zugehöriger Ladungsspeicher (Q2), insbesondere ein Kondensator, mittels eines von einer Steuereinheit (CU) gesteuerten Ladungstransfers geladen oder ein bereits geladener Ladungsspeicher (Q2) der Elektrode (EL) zugeschaltet wird und während der Testphase (T_{T}) die an der Elektrode (EL) anliegende Elektrodenspannung (U_{E}) mindestens einmal gemessen wird, wonach der oder die ermittelten Messwerte mit wenigstens einem Referenzwert verglichen werden.

2. Verfahren nach Anspruch 1, **dadurch gekennzeichnet, dass** der Ladungsspeicher (Q2) mit der Elektrode (EL) fest verbunden ist oder nur für die Prüfphase (Tp) verbunden wird und/oder dass der Ladungsspeicher (Q2) zum Zweck des Ladungstransfers, einerseits mit einer Ladungsquelle (Q1), gegebenenfalls einer Versorgungsspannung, und für die Prüfphase (Tp) andererseits mit der Elektrode (EL) verbindbar ist.

3. Verfahren nach Anspruch 1 oder 2, **dadurch gekennzeichnet, dass** während des Betriebs der Messsonde (1) mindestens eine Messphase zur Messung der Ionen-Konzentration des Prozessguts (6) vorgesehen wird und dass diese Messphase während der Prüfphase (Tp) unterbrochen wird.

4. Verfahren nach Anspruch 3, **dadurch gekennzeichnet, dass** die an der Elektrode (EL) anliegende Spannung während der Messphase und/oder der Prüfphase über einen Verstärker (OP) einer Auswerteeinheit zugeführt wird, die in der Messsonde oder in einem mit der Messsonde (1) verbundenen Messsumformer oder Transmitter vorgesehen ist.

5. Verfahren nach Anspruch 4, **dadurch gekennzeichnet, dass** die während der Prüfphase ermittelten Messwerte, gegebenenfalls der teilweise oder vollständige Verlauf der Entladung des Ladungsspeichers (Q2), in der Auswerteeinheit mit wenigstens einem Schwellwert oder mit charakteristischen Kurvenverläufen verglichen wird, denen mögliche Zustände der Messsonde, wie ein Mass der reduzierten Ladungsträgerbeweglichkeit, ein Wert der Ansprechzeit, ein Wert der Steilheit, ein Defekt der Glasmembran, eine Verschmutzung der Messsonde (1) zugeordnet sind.

6. Verfahren nach Anspruch 5, **dadurch gekennzeichnet, dass** der ermittelte Zustand der Messsonde (1) eine korrespondierende Restlebenszeit oder ein Wartungsbedarf signalisiert werden.

7. Verfahren nach Anspruch 5 oder 6, **dadurch gekennzeichnet, dass** der in einer ersten und einer zweiten Prüfphase ermittelte Zustand der Messsonde (1) miteinander verglichen und gegebenenfalls extrapoliert werden, um, gegebenenfalls unter Berücksichtigung des Prozessverlaufs, die Lebensdauer der Messsonde (1) zu ermitteln, und/oder dass der in einer ersten und einer zweiten Prüfphase ermittelte Zustand der Messsonde (1) miteinander verglichen werden, um Veränderungen der Messsonde (1) zu ermitteln, die eine Störung anzeigen.

8. Verfahren nach Anspruch 5, 6 oder 7, **dadurch gekennzeichnet, dass** der ermittelte Zustand der Messsonde (1), insbesondere die Steilheit und die Ansprechzeit ermittelt wird, um Korrekturfaktoren oder Verzögerungsfaktoren anzupassen, die während der Messphase zur Verarbeitung des Messsignals verwendet werden.

9. Verfahren nach einem der Ansprüche 1 bis 8, **dadurch gekennzeichnet, dass** zu Beginn der Testphase (T_{T}) der Ladungsspeicher (Q2), insbesondere mittels einer ersten Schaltvorrichtung (S1), von der Ladungsquelle (Q1) getrennt wird.

10. Verfahren nach einem der Ansprüche 1 bis 9, **dadurch gekennzeichnet, dass** die Elektrodenspannung (U_{E}) während der Testphase (T_{T}) genügend oft gemessen wird, um die charakteristischen Parameter des Verlaufs der Elektrodenspannung (U_{E}) zu bestimmen.

11. Verfahren nach einem der Ansprüche 1 bis 10, **dadurch gekennzeichnet, dass** anschliessend an die Testphase (T_{T}) die Ladung des Ladungsspeichers (Q2) mittels einer zweiten Schaltvorrichtung (S2), insbesondere durch einen Erdschluss, gelöscht wird.

12. Verfahren nach einem der Ansprüche 2 bis 11, **dadurch gekennzeichnet, dass** während der Messphase weitere Messsignale, wie bipolare Pulse, mittels einer dritten Schaltvorrichtung (S3), an die Elektrode (EL) zugeschaltet werden, um zusätzliche Widerstandsmessungen der Elektrode (EL) durchzuführen.

13. Verfahren nach einem der Ansprüche 1 bis 12, **dadurch gekennzeichnet, dass** die Prüfphasen (T_{P}) in veränderbar vordefinierten Zeitabständen, insbesondere in Zeitabständen von Minuten, Stunden oder Tagen wiederholt werden.

14. Vorrichtung zur Überwachung und/oder zur Bestimmung des Zustandes einer elektro-chemischen Messsonde (1), insbesondere einer pH-Messsonde, Sauerstoff-Messsonde oder einer CO₂-Messsonde, mit mindestens einer Elektrode (EL) und einer Signalverarbeitungseinheit (OP), wobei während des Betriebs der Messsonde (1) eine mit der Ionen-Konzentration eines Prozessguts (6) in Zusammenhang stehenden Messgrösse ermittelt werden kann,
**dadurch gekennzeichnet, dass**
die Messsonde (1) einen der Elektrode zugeordneten durch einen kontrollierbaren Ladungstransfer ladbaren Ladungsspeicher (Q2), eine der Erzeugung einer Prüfphase (Tp), welche eine Ladungsphase (T_{L}) und eine daran anschliessende Testphase (T_{T}) aufweist, dienende Steuereinheit (CU) und einen der Weiterleitung eines während der Testphase (T_{T}) mindestens einmal gemessenen Elektrodenspannungswerts (U_{E}) zu der Signalverarbeitungseinheit (OP) dienenden Signaldraht (19) umfasst.

15. Vorrichtung nach Anspruch 14, **dadurch gekennzeichnet, dass**
der Ladungsspeicher, vorzugsweise mittels einer ersten Schaltvorrichtung (S1), mit einer Ladungsquelle (Q1) verbindbar ist.

16. Vorrichtung nach Anspruch 14 oder 15, **dadurch gekennzeichnet, dass** der Ladungsspeicher (Q1) durch eine zweite Schaltvorrichtung (S2), vorzugsweise durch einen Erdschluss, löschbar ist.

17. Vorrichtung nach einem der Ansprüche 14 bis 16, **dadurch gekennzeichnet, dass** der Elektrode (EL) weitere Messsignale, wie bipolare Pulse, mittels einer dritten Schaltvorrichtung (S3), vorzugsweise während der Messphase, zuschaltbar sind, um Widerstandsmessungen der Elektrode durchzuführen.
